# EUROPEAN PATENT SPECIFICATION

(11) **EP 3 796 246 B1**
(45) Date of publication and mention of the grant of the patent: **01.11.2023**
(21) Application number: 19803256.7
(22) Date of filing: 13.05.2019
(51) Int. Cl.: G06Q 40/00

(54) **ACCOUNT CLEARING AND RECONCILIATION METHOD, APPARATUS, AND COMPUTER DEVICE**
VERFAHREN, EINRICHTUNG UND COMPUTERVORRICHTUNG ZUM KONTO-CLEARING UND -ABGLEICH
PROCÉDÉ DE COMPENSATION ET DE RAPPROCHEMENT DE COMPTES, APPAREIL ET DISPOSITIF INFORMATIQUE

(30) Priority: 14.05.2018 CN 201810454908
(43) Date of publication of application: 24.03.2021
(73) Proprietor: Netsunion Clearing Corporation, Beijing 100045 (CN)
(72) Inventor: ZHANG, Qun, Beijing 100045 (CN); ZHANG, Zhiyuan, Beijing 100045 (CN); LI, Ping, Beijing 100045 (CN)
(74) Representative: Ege Lee & Roider Patentanwälte
(86) International application number: PCT/CN2019/086692
(87) International publication number: WO 2019/218977

(56) References cited:
- CN-A- 105 653 551
- CN-A- 107 025 236
- CN-A- 107 025 236
- CN-A- 107 169 749
- CN-A- 107 784 094
- CN-A- 109 741 159
- US-A1- 2006 235 785

## Description

### FIELD

The present disclosure relates to the field of clearing technologies, and more particularly, to a clearing and reconciliation method and apparatus.

### BACKGROUND

In the related art, clearing and reconciliation is only performed on data to be cleared and reconciled at the end of a transaction day. Consequently, the efficiency of clearing and reconciliation is low. In addition, the pressure of the business system is concentrated at specific time points, the utilization rate of system resources is low, and the real-time capability is unsatisfying The prior art CN 107169749 presents a method which enables to improve a transaction process by having a self-defined reconciliation period that reduces the period of account verification. The reconciliation period is therefore of the order of one-hour, three-hours or six-hours.

### SUMMARY

The present disclosure aims at solving one of the technical problems in the related art at least to some extent.

To this end, an objective of the present disclosure is to provide a clearing and reconciliation method, according to independent claim 1,
which may mitigate the pressure on the business system, increase clearing and reconciliation efficiency, improve the utilization rate of system resources, and enhance the real-time capability.

Another objective of the present disclosure is to provide a clearing and reconciliation apparatus, according to independent claim 5.

Another objective of the present disclosure is to provide a non-transitory computer-readable storage medium, according to independent claim 9.

Another objective of the present disclosure is to provide a computer program product, according to independent claim 10. Further detailed embodiments are defined in the dependent claims.

To achieve the above objectives, embodiments of a first aspect of the present disclosure provide a clearing and reconciliation method. The method includes: partitioning a preset factor corresponding to data to be cleared and reconciled to obtain a plurality of partition points; and performing clearing and reconciliation on data to be cleared and reconciled accumulated at each partition point.

With the clearing and reconciliation method according to embodiments of the first aspect of the present disclosure, the preset factor corresponding to the data to be cleared and reconciled is partitioned to obtain the plurality of partition points. Clearing and reconciliation are performed on the data to be cleared and reconciled accumulated at each partition point. Consequently, the pressure on the business system may be mitigated, clearing and reconciliation efficiency may be increased, the utilization rate of system resources may be improved, and the real-time capability may be enhanced.

To achieve the above objectives, embodiments of a second aspect of the present disclosure provide a clearing and reconciliation apparatus. The apparatus includes: a partition module, configured to partition a preset factor corresponding to data to be cleared and reconciled to obtain a plurality of partition points; and a clearing and reconciliation module, configured to perform clearing and reconciliation on data to be cleared and reconciled accumulated at each partition point.

With the clearing and reconciliation apparatus according to embodiments of the second aspect of the present disclosure, the preset factor corresponding to the data to be cleared and reconciled is partitioned to obtain the plurality of partition points. Clearing and reconciliation are performed on the data to be cleared and reconciled accumulated at each partition point. Consequently, the pressure on the business system may be mitigated, clearing and reconciliation efficiency may be increased, the utilization rate of system resources may be improved, and the real-time capability may be enhanced.

To achieve the above objectives, embodiments of a third aspect of the present disclosure provide a non-transitory computer-readable storage medium. When an instruction in the storage medium is executed by a processor in a mobile terminal, the mobile terminal is caused to perform a clearing and reconciliation method. The method includes: partitioning a preset factor corresponding to data to be cleared and reconciled to obtain a plurality of partition points; and performing clearing and reconciliation on data to be cleared and reconciled accumulated at each partition point.

With the non-transitory computer-readable storage medium according to embodiments of the third aspect of the present disclosure, the preset factor corresponding to the data to be cleared and reconciled is partitioned to obtain the plurality of partition points. Clearing and reconciliation are performed on the data to be cleared and reconciled accumulated at each partition point. Consequently, the pressure on the business system may be mitigated, clearing and reconciliation efficiency may be increased, the utilization rate of system resources may be improved, and the real-time capability may be enhanced.

To achieve the above objectives, embodiments of a fourth aspect of the present disclosure provide a computer program product. When an instruction in the computer program product is executed by a processor, a clearing and reconciliation method is implemented. The method includes: partitioning a preset factor corresponding to data to be cleared and reconciled to obtain a plurality of partition points; and performing clearing and reconciliation on data to be cleared and reconciled accumulated at each partition point.

With the computer program product according to embodiments of the fourth aspect of the present disclosure, the preset factor corresponding to the data to be cleared and reconciled is partitioned to obtain the plurality of partition points. Clearing and reconciliation are performed on the data to be cleared and reconciled accumulated at each partition point. Consequently, the pressure on the business system may be mitigated, clearing and reconciliation efficiency may be increased, the utilization rate of system resources may be improved, and the real-time capability may be enhanced.

Embodiments of a fifth aspect of the present disclosure further provide a computer device including a housing, a processor, a storage device, a circuit board, and a power supply circuit. The circuit board is arranged inside a space enclosed by the housing. The processor and the storage device are arranged on the circuit board. The power supply circuit is configured to supply power to respective circuits or components of the computer device. The storage device is configured to store an executable program code. The processor is configured to run a program corresponding to the executable program code by reading the executable program code stored in the storage device so as to execute: partitioning a preset factor corresponding to data to be cleared and reconciled to obtain a plurality of partition points; and performing clearing and reconciliation on data to be cleared and reconciled accumulated at each partition point.

With the computer device according to embodiments of the fifth aspect of the present disclosure, the preset factor corresponding to the data to be cleared and reconciled is partitioned to obtain the plurality of partition points. Clearing and reconciliation are performed on the data to be cleared and reconciled accumulated at each partition point. Consequently, the pressure on the business system may be mitigated, clearing and reconciliation efficiency may be increased, the utilization rate of system resources may be improved, and the real-time capability may be enhanced.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the accompanying drawings.
FIG. 1 is a flowchart of a clearing and reconciliation method according to an embodiment of the present disclosure.
FIG. 2 is a flowchart of a clearing and reconciliation method according to another embodiment of the present disclosure.
FIG. 3 is a flowchart of a clearing and reconciliation method according to another embodiment of the present disclosure.
FIG. 4 is a flowchart of a clearing and reconciliation method according to another embodiment of the present disclosure.
FIG. 5 is a schematic diagram of a clearing and reconciliation apparatus according to an embodiment of the present disclosure.
FIG. 6 is a schematic diagram of a clearing and reconciliation apparatus according to another embodiment of the present disclosure.
FIG. 7 is a schematic diagram of a computer device according to an embodiment of the present disclosure.

### DETAILED DESCRIPTION

Descriptions will now be made in detail to embodiments of the present disclosure, examples of which are illustrated in the accompanying drawings. The same or similar elements and the elements having same or similar functions are denoted by same or similar reference numerals throughout the descriptions. The embodiments described herein with reference to the drawings are explanatory, serve to explain the present disclosure, and are not construed to limit the present disclosure.

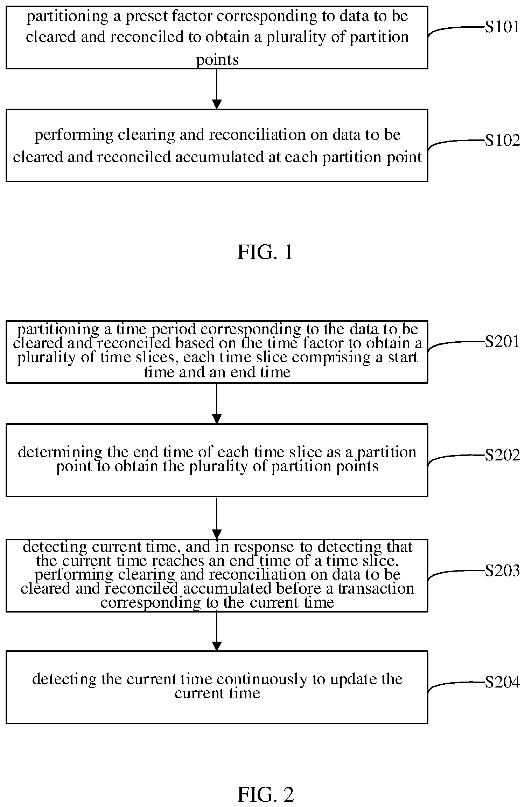

FIG. 1 is a flowchart of a clearing and reconciliation method according to an embodiment of the present disclosure.

The clearing and reconciliation method according to embodiments of the present disclosure may be applied to a net union clearing platform, which is not limited in the present disclosure. In the embodiment, as an example, the clearing and reconciliation method is configured in a clearing and reconciliation apparatus.

The clearing and reconciliation apparatus may be set in a server or a mobile device, which is not limited in embodiments of the present disclosure.

As illustrated in FIG. 1, the method includes the following.

At block S101, a preset factor corresponding to data to be cleared and reconciled is partitioned to obtain multiple partition points.

The preset factor may be, for example, a time factor, a business scale factor, or a transaction flow factor corresponding to the data to be cleared and reconciled, which is not limited.

In the related art, the clearing and reconciliation are performed on the data to be cleared and reconciled at the end of a transaction day. Consequently, the efficiency of clearing and reconciliation is low. In addition, the pressure of the business system is concentrated at specific time points, the utilization rate of system resources is low, and the real-time capability is unsatisfying

The preset factor corresponding to the data to be cleared and reconciled is partitioned to obtain the multiple partition points. That is, the data to be cleared and reconciled is gradually generated as transactions progress. For example, the data to be cleared and reconciled is gradually generated as time progresses, or, as transactions scale up. Consequently, the preset factor corresponding to the data to be cleared and reconciled is partitioned to obtain the multiple partition points, such that, for each partition point, the clearing and reconciliation are performed on data to be cleared and reconciled accumulated at the current partition point. Since the clearing and reconciliation are performed on the data to be cleared and reconciled accumulated at current partition point for each partition point, the data to be cleared and reconciled accumulated at each partition point may be regarded as a part of sub-data of the data to be cleared and reconciled, and the volume of the part of sub-data is relatively small, thereby, the pressure on the business system may be mitigated, clearing and reconciliation efficiency may be increased, the utilization rate of system resources may be improved, and the real-time capability may be enhanced.

In some embodiments, as illustrated in FIG. 2, when the preset factor is a time factor, the action at block S101 may include the following.

At block S201, a time period corresponding to the data to be cleared and reconciled is partitioned based on the time factor to obtain multiple time slices. Each time slice includes a start time and an end time.

The time length of each time slice may be the same or different.

It is understandable that the time period corresponding to the total data to be cleared and reconciled may include one or more time slices. The time period corresponding to the total data to be cleared and reconciled may be, for example, one day.

In an actual implementation process, the time period of one day may be divided into time slices of, for example, one hour, two hours, three hours, one hour ..., until the sum of time lengths of the time slices obtained by the division is equal to the time length of the one day. After the division is completed, a sequence of time slices may be formed. Subsequently, when the data to be cleared and reconciled is cleared and reconciled, clearing and reconciliation are performed based on each time slice in turn as time progresses. Since the time slices are divided in advance, the implementation is easy and system resource consumption may be saved.

At block S202, the end time of each time slice is determined as a partition point to obtain the multiple partition points.

In embodiments of the present disclosure, in order to facilitate the implementation of the method, the end time of each time slice may be determined as the partition point to obtain the multiple partition points. Consequently, as the transaction time goes on, when the current time reaches a partition point, clearing and reconciliation are performed on data to be cleared and reconciled accumulated before a transaction corresponding to the current time, such that the real-time capability of the method may be effectively improved.

At block S203, current time is detected. In response to detecting that the current time reaches an end time of a time slice, clearing and reconciliation are performed on data to be cleared and reconciled accumulated before a transaction corresponding to the current time.

For example, system time of the transaction system may be directly read to detect the current time.

In embodiments of the present disclosure, a sequence of partition points may be formed. During subsequently clearing and reconciling the data to be cleared and reconciled, as time progresses, it is sequentially detected whether the current time reaches a partition point to trigger the clearing and reconciliation. Since the partition points are determined in advance, the implementation is easy and system resource consumption may be saved.

Further, in embodiments of the present disclosure, a time threshold may be set. For example, the time threshold is 20 minutes. When the current time reaches an end time of a time slice, and exceeds the end time for 20 minutes, the clearing and reconciliation of the data to be cleared and reconciled accumulated before the transaction corresponding to the current time are triggered.

At block S204, the current time is detected continuously to update the current time.

In embodiments of the present disclosure, after clearing and reconciliation is performed on the data to be cleared and reconciled accumulated before the transaction corresponding to the current time when the current time reaches the end time of a time slice, the current time may be detected continuously. When the current time updated reaches an end time of a next time slice, clearing and reconciliation is performed on data to be cleared and reconciled accumulated before a transaction corresponding to the current time updated and after the current time before the update continuously, so as to realize the clearing and reconciliation of the data to be cleared and reconciled accumulated at each partition point to ensure the completeness and technical feasibility of the method.

In embodiments of the present disclosure, since the data to be cleared and reconciled is gradually generated as the transactions progress, for example, the data to be cleared and reconciled is gradually generated as time progresses, or as the transactions scale up, a dynamic partition may be performed during the process of generating the data to be cleared and reconciled. For example, the transaction flow may be calculated in real time. When the flow exceeds a preset scale threshold or exceeds a set time point, the next slice is automatically switched to be used, thereby effectively improving the flexibility and applicability of the method. For example, when the number of transactions exceeds 1 million, the next slice is entered. A time length of each slice may not exceed one hour, and each slice may not span any o'clock sharp.

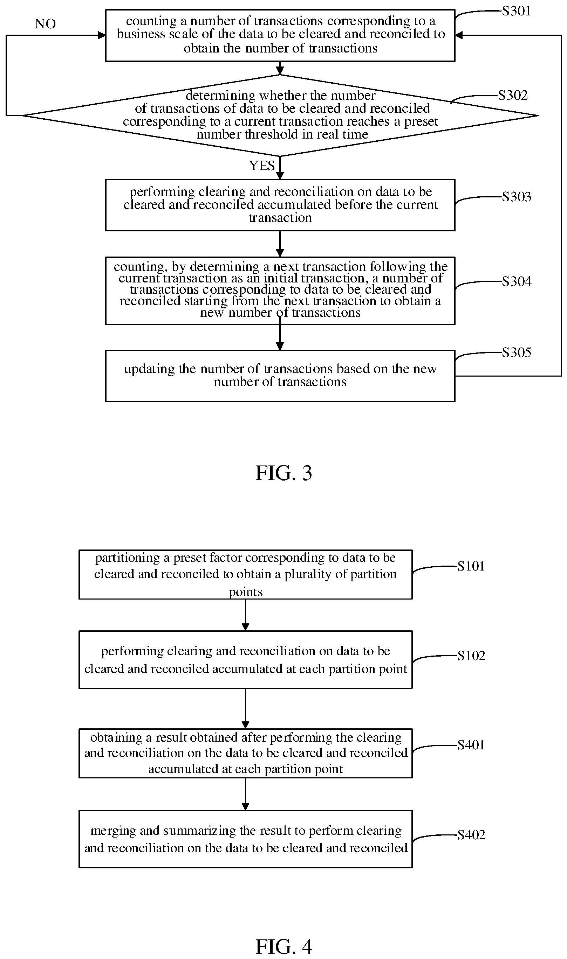

In some embodiments, as illustrated in FIG. 3, when the preset factor is a business scale factor of the data to be cleared and reconciled, the action at block S 101 may include the following.

At block S301, a number of transactions corresponding to a business scale of the data to be cleared and reconciled is counted to obtain the number of transactions.

It may be understood that, since the data to be cleared and reconciled is gradually generated as the transactions progress, for example, gradually generated as time progresses, or as the transactions scale up, the number of transactions corresponding to the business scale of the data to be cleared and reconciled is counted to obtain the number of transactions.

At block S302, it is determined whether the number of transactions of data to be cleared and reconciled corresponding to the current transaction reaches a preset number threshold in real time. If yes, an action at block S303 is triggered; otherwise, an action at block S301 is repeated.

The preset number threshold is preset. The preset number threshold may be preset by a factory program of the net union clearing platform, or may be set by a user according to practical business needs, which is not limited in the present disclosure.

The preset number threshold may be, for example, 1 million.

At block S303, clearing and reconciliation is performed on data to be cleared and reconciled accumulated before the current transaction.

At block S304, a number of transactions corresponding to data to be cleared and reconciled starting from the next transaction is counted by determining a next transaction following the current transaction as an initial transaction to obtain a new number of transactions.

At block S305, the number of transactions is updated based on the new number of transactions.

In embodiments of the present disclosure, after clearing and reconciliation is performed on the data to be cleared and reconciled accumulated before the current transaction when the number of transactions of data to be cleared and reconciled corresponding to the current transaction reaches the preset number threshold, the number of transactions of the data to be cleared and reconciled may be counted continuously. When a new number of transactions reaches the preset number threshold, clearing and reconciliation is performed on data to be cleared and reconciled accumulated before the current transaction and after the next transaction that is determined as the initial transaction, so as to ensure the completeness and technical feasibility of the method.

At block S 102, clearing and reconciliation are performed on data to be cleared and reconciled accumulated at each partition point.

As illustrated in FIG. 4, after the action at block S 102, the method may further include the following.

At block S401, a result obtained after performing the clearing and reconciliation on the data to be cleared and reconciled accumulated at each partition point is obtained.

At block S402, the result is merged and summarized to perform clearing and reconciliation on the data to be cleared and reconciled.

In embodiments of the present disclosure, the result obtained by performing the clearing and reconciliation may be extracted and analyzed, and summarizing is performed based on labels in the result. The labels may be, for example, transaction batch numbers, transaction bank identifications, or transaction types, which are not limited in embodiments of the present disclosure.

By merging and summarizing the result, clearing and reconciliation is performed on the data to be cleared and reconciled. Compared with performing the clearing and reconciliation on the data to be cleared and reconciled at the end of a transaction day in the related art, the efficiency of clearing and reconciliation is effectively improved with data accuracy guaranteed.

In some embodiments, by partitioning the preset factor corresponding to the data to be cleared and reconciled, the multiple partition points are obtained. Clearing and reconciliation are performed on the data to be cleared and reconciled accumulated at each partition point. Consequently, the pressure on the business system may be mitigated, clearing and reconciliation efficiency may be increased, the utilization rate of system resources may be improved, and the real-time capability may be enhanced.

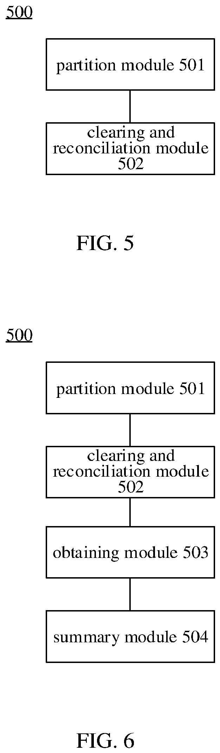

FIG. 5 is a schematic diagram of a clearing and reconciliation apparatus according to an embodiment of the present disclosure.

As illustrated in FIG. 5, an apparatus 500 includes a partition module 501 and a clearing and reconciliation module 502.

The partition module 501 is configured to partition a preset factor corresponding to data to be cleared and reconciled to obtain multiple partition points.

The clearing and reconciliation module 502 is configured to perform clearing and reconciliation on data to be cleared and reconciled accumulated at each partition point.

In some embodiments, as illustrated in FIG. 6, the apparatus 500 further includes an obtaining module 503 and a summary module 504.

The obtaining module 503 is configured to obtain a result obtained after performing the clearing and reconciliation on the data to be cleared and reconciled accumulated at each partition point.

The summary module 504 is configured to merge and summarize the result to perform clearing and reconciliation on the data to be cleared and reconciled.

In some embodiments, the preset factor is a time factor. The partition module 501 is configured to: partition a time period corresponding to the data to be cleared and reconciled based on the time factor to obtain multiple time slices, in which each time slice includes a start time and an end time; determine the end time of each time slice as a partition point to obtain the multiple partition points; and detect current time, and in response to detecting that the current time reaches an end time of a time slice, perform clearing and reconciliation on data to be cleared and reconciled accumulated before a transaction corresponding to the current time.

The partition module 501 is configured to detect the current time continuously to update the current time.

The preset factor is a business scale factor of the data to be cleared and reconciled. The partition module 501 is configured to: count a number of transactions corresponding to a business scale of the data to be cleared and reconciled to obtain a number of transactions; determine whether the number of transactions of data to be cleared and reconciled corresponding to a current transaction reaches a preset number threshold in real time; and in response to determining that the number of transactions of the data to be cleared and reconciled corresponding to the current transaction reaches the preset number threshold, perform clearing and reconciliation on data to be cleared and reconciled accumulated before the current transaction.

After perform clearing and reconciliation on the data to be cleared and reconciled accumulated before the current transaction, the partition module 501 is configured to: count, by determining a next transaction following the current transaction as an initial transaction, a number of transactions corresponding to data to be cleared and reconciled starting from the next transaction to obtain a new number of transactions; and update the number of transactions based on the new number of transactions.

It should be noted that the description of the clearing and reconciliation method according to embodiments of FIGS. 1 to 4 is also applicable to the clearing and reconciliation apparatus 500 according to the above embodiments. The implementation principles of the apparatus are similar to those of the method, and thus will not be repeated here.

The preset factor corresponding to the data to be cleared and reconciled to is partitioned obtain the multiple partition points. Clearing and reconciliation are performed on the data to be cleared and reconciled accumulated at each partition point. Consequently, the pressure on the business system may be mitigated, clearing and reconciliation efficiency may be increased, the utilization rate of system resources may be improved, and the real-time capability may be enhanced.

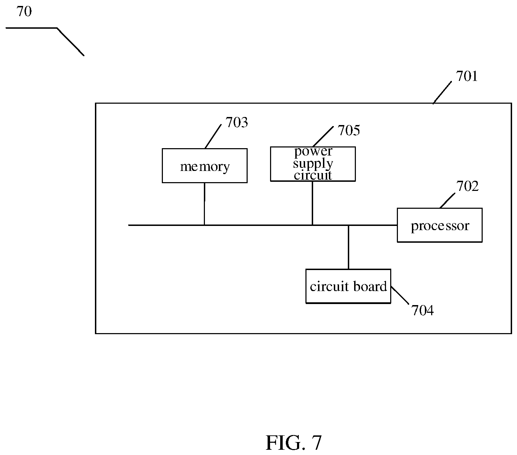

FIG. 7 is a schematic diagram of a computer device according to an embodiment of the present disclosure.

The computer device may be a mobile phone, a tablet computer, and so on.

As illustrated in FIG. 7, a computer device 70 according to the embodiment includes a housing 701, a processor 702, a memory 703, a circuit board 704, and a power supply circuit 705. The circuit board 704 is arranged inside a space enclosed by the housing 701. The processor 702 and the memory 703 are arranged on the circuit board 704. The power supply circuit 705 is configured to supply power to respective circuits or components of the computer device 70. The memory 703 is configured to store an executable program code. The processor 702 is configured to run a program corresponding to the executable program code by reading the executable program code stored in the storage device 703 so as to execute: partitioning a preset factor corresponding to data to be cleared and reconciled to obtain a plurality of partition points; and performing clearing and reconciliation on data to be cleared and reconciled accumulated at each partition point.

It should be noted that the description of the clearing and reconciliation method according to embodiments of FIGS. 1 to 4 is also applicable to the computer device 70. The implementation principles of the computer device 70 are similar to those of the method, and thus will not be repeated here.

In the computer device, the preset factor corresponding to the data to be cleared and reconciled is partitioned to obtain the plurality of partition points. Clearing and reconciliation are performed on the data to be cleared and reconciled accumulated at each partition point. Consequently, the pressure on the business system may be mitigated, clearing and reconciliation efficiency may be increased, the utilization rate of system resources may be improved, and the real-time capability may be enhanced.

The present disclosure further provides a non-transitory computer-readable storage medium. When an instruction in the storage medium is executed by a processor in a mobile terminal, the mobile terminal may be caused to perform a clearing and reconciliation method. The method includes: partitioning a preset factor corresponding to data to be cleared and reconciled to obtain a plurality of partition points; and performing clearing and reconciliation on data to be cleared and reconciled accumulated at each partition point.

In With the non-transitory computer-readable storage medium of the present disclosure, the preset factor corresponding to the data to be cleared and reconciled is partitioned to obtain the plurality of partition points. Clearing and reconciliation are performed on the data to be cleared and reconciled accumulated at each partition point. Consequently, the pressure on the business system may be mitigated, clearing and reconciliation efficiency may be increased, the utilization rate of system resources may be improved, and the real-time capability may be enhanced.

The present disclosure further provides a computer program product. When an instruction in the computer program product is executed by a processor, a clearing and reconciliation method is implemented. The method includes: partitioning a preset factor corresponding to data to be cleared and reconciled to obtain a plurality of partition points; and performing clearing and reconciliation on data to be cleared and reconciled accumulated at each partition point.

In the computer program product of the present disclosure, the preset factor corresponding to the data to be cleared and reconciled is partitioned to obtain the plurality of partition points. Clearing and reconciliation are performed on the data to be cleared and reconciled accumulated at each partition point. Consequently, the pressure on the business system may be mitigated, clearing and reconciliation efficiency may be increased, the utilization rate of system resources may be improved, and the real-time capability may be enhanced.

It should be noted that, in the description of the present disclosure, terms such as "first" and "second" are used herein for purposes of description and are not intended to indicate or imply relative importance or significance. In addition, in the description of the present disclosure, "multiple" means two or more, unless specified otherwise.

Any process or method described in a flow chart or described herein in other ways may be understood to include one or more modules, segments or portions of codes of executable instructions for achieving specific logical functions or steps in the process, and the scope of a preferred embodiment of the present disclosure includes other implementations in which the order of execution is different from that which is depicted or discussed, including executing functions in a substantially simultaneous manner or in an opposite order according to the related functions, which should be understood by those skilled in the art, when falling within the scope of the invention as defined by the appended claims.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

It would be understood by those skilled in the art that all or parts of the steps carried by the method in the above-described embodiments may be completed by commanding the related hardware with programs. The programs may be stored in a computer readable storage medium, and the programs include one or a combination of the steps in the method embodiments of the present disclosure when run on a computer.

In addition, individual functional units in the embodiments of the present disclosure may be integrated in one processing module or may be separate physical existence, or two or more units may be integrated in one module. The integrated module as described above may be realized in the form of hardware, or may be realized in the form of a software functional module. When the integrated module is realized in the form of a software functional module and is sold or used as a standalone product, the integrated module may also be stored in a computer readable storage medium.

The storage medium mentioned above may be read-only memories, magnetic disks or CD, etc.

In the description of the present disclosure, reference throughout this specification to "an embodiment," "some embodiments," "an example," "a specific example," or "some examples," means that a particular feature, structure, material, or characteristic described in connection with the embodiment or example is included in at least one embodiment or example of the present disclosure. In the specification, the appearances of the above terms throughout this specification are not necessarily referring to the same embodiment or example of the present disclosure. Furthermore, the particular features, structures, materials, or characteristics may be combined in any suitable manner in one or more embodiments or examples.

Although embodiments of present disclosure have been shown and described above, it should be understood that above embodiments are just explanatory, and cannot be construed to limit the present invention which is solely defined by the appended claims.

## Claims

1. A clearing and reconciliation method carried out by a computing apparatus (500), comprising:
partitioning (S101) a preset factor corresponding to data to be cleared and reconciled to obtain a plurality of partition points; and
performing (S102) clearing and reconciliation on data to be cleared and reconciled accumulated at each partition point;
wherein the preset factor is a business scale factor of the data to be cleared and reconciled, and partitioning (S101) the preset factor corresponding to the data to be cleared and reconciled to obtain the plurality of partition points comprises:
counting (S301) a number of transactions corresponding to a business scale of the data to be cleared and reconciled to obtain the number of transactions;
determining (S302) whether the number of transactions of data to be cleared and reconciled corresponding to a current transaction reaches a preset number threshold in real time; and
in response to determining that the number of transactions of the data to be cleared and reconciled corresponding to the current transaction reaches the preset number threshold, performing (S303) clearing and reconciliation on data to be cleared and reconciled accumulated before the current transaction.

2. The method of claim 1, further comprising:
obtaining (S401) a result obtained after performing the clearing and reconciliation on the data to be cleared and reconciled accumulated at each partition point; and
merging and summarizing (S402) the result to perform clearing and reconciliation on the data to be cleared and reconciled.

3. The method of claim 1 or 2, wherein the preset factor is a time factor, and partitioning (S101) the preset factor corresponding to the data to be cleared and reconciled to obtain the plurality of partition points comprises:
partitioning (S201) a time period corresponding to the data to be cleared and reconciled based on the time factor to obtain a plurality of time slices, each time slice comprising a start time and an end time;
determining (S202) the end time of each time slice as a partition point to obtain the plurality of partition points; and
in response to detecting that the current time reaches an end time of a time slice, performing (S203) clearing and reconciliation on data to be cleared and reconciled accumulated before a transaction corresponding to the current time.

4. The method of claim 1, after performing clearing and reconciliation on the data to be cleared and reconciled accumulated before the current transaction, further comprising:
counting (S304), by determining a next transaction following the current transaction as an initial transaction, a number of transactions corresponding to data to be cleared and reconciled starting from the next transaction to obtain a new number of transactions; and
updating (S305) the number of transactions based on the new number of transactions.

5. A clearing and reconciliation apparatus (500), comprising:
a partition module (501), configured to partition a preset factor corresponding to data to be cleared and reconciled to obtain a plurality of partition points; and
a clearing and reconciliation module (502), configured to perform clearing and reconciliation on data to be cleared and reconciled accumulated at each partition point;
wherein the preset factor is a business scale factor of the data to be cleared and reconciled, and the partition module (501) is configured to:
count a number of transactions corresponding to a business scale of the data to be cleared and reconciled to obtain a number of transactions;
determine whether the number of transactions of data to be cleared and reconciled corresponding to a current transaction reaches a preset number threshold in real time; and
in response to determining that the number of transactions of the data to be cleared and reconciled corresponding to the current transaction reaches the preset number threshold, perform clearing and reconciliation on data to be cleared and reconciled accumulated before the current transaction.

6. The apparatus (500) of claim 5, further comprising:
an obtaining module (503), configured to obtain a result obtained after performing the clearing and reconciliation on the data to be cleared and reconciled accumulated at each partition point; and
a summary module (504), configured to merge and summarize the result to perform clearing and reconciliation on the data to be cleared and reconciled.

7. The apparatus (500) of claim 5 or 6, wherein the preset factor is a time factor, and the partition module (501) is configured to:
partition a time period corresponding to the data to be cleared and reconciled based on the time factor to obtain a plurality of time slices, each time slice comprising a start time and an end time;
determine the end time of each time slice as a partition point to obtain the plurality of partition points; and
in response to detecting that the current time reaches an end time of a time slice, perform clearing and reconciliation on data to be cleared and reconciled accumulated before a transaction corresponding to the current time.

8. The apparatus (500) of claim 5, after perform clearing and reconciliation on the data to be cleared and reconciled accumulated before the current transaction, the partition module (501) is configured to:
count, by determining a next transaction following the current transaction as an initial transaction, a number of transactions corresponding to data to be cleared and reconciled starting from the next transaction to obtain a new number of transactions; and
update the number of transactions based on the new number of transactions.

9. A non-transitory computer-readable storage medium having a computer program stored thereon, wherein when the program is executed by a processor, the clearing and reconciliation method of any one of claims 1-4 is implemented.

10. A computer program, wherein when an instruction in the computer program is executed by a processor, the clearing and reconciliation method of any one of claims 1-4 is implemented.

## Patentansprüche

1. Clearing- und Abgleichsverfahren, das von einer Datenverarbeitungsvorrichtung (500) durchgeführt wird, umfassend:
Partitionieren (S101) eines voreingestellten Faktors, entsprechend Daten, die zu clearen und abzugleichen sind, um mehrere Partitionspunkte zu beziehen; und
Durchführen (S102) eines Clearings und eines Abgleichs an Daten, die zu clearen und abzugleichen sind und die sich an jedem Partitionspunkt akkumuliert haben;
wobei der voreingestellte Faktor ein Unternehmensmaßstabfaktor der Daten ist, die zu clearen und abzugleichen sind, und das Partitionieren (S101) des voreingestellten Faktors, entsprechend den Daten, die zu clearen und abzugleichen sind, um die mehreren Partitionspunkte zu beziehen, umfasst:
Zählen (S301) einer Anzahl von Transaktionen, die einem Unternehmensmaßstab der Daten entsprechen, die zu clearen und abzugleichen sind, um die Anzahl von Transaktionen zu beziehen;
Bestimmen (S302), ob die Anzahl von Transaktionen von Daten, die zu clearen und abzugleichen sind, die einer aktuellen Transaktion entsprechen, in Echtzeit einen voreingestellten Anzahlgrenzwert erreicht; und
als Reaktion auf das Bestimmen, dass die Anzahl von Transaktionen der Daten, die zu clearen und abzugleichen sind, die einer aktuellen Transaktion entsprechen, den voreingestellten Anzahlgrenzwert erreicht, Durchführen (S303) eines Clearings und eines Abgleichs an Daten, die zu clearen und abzugleichen sind und die sich vor der aktuellen Transaktion akkumuliert haben.

2. Verfahren nach Anspruch 1, weiterhin umfassend:
Beziehen (S401) eines Ergebnisses, das nach dem Durchführen des Clearings und des Abgleichs an den Daten, die zu clearen und abzugleichen sind und die sich an jedem Partitionspunkt akkumuliert haben, bezogen wird; und
Fusionieren und Zusammenfassen (S402) des Ergebnisses, um ein Clearing und einen Abgleich an den Daten durchzuführen, die zu clearen und abzugleichen sind.

3. Verfahren nach Anspruch 1 oder 2, wobei der voreingestellte Faktor ein Zeitfaktor ist und das Partitionieren (S101) des voreingestellten Faktors, entsprechend den Daten, die zu clearen und abzugleichen sind, um die mehreren Partitionspunkte zu beziehen, umfasst:
Partitionieren (S201) eines Zeitraums, entsprechend den Daten, die zu clearen und abzugleichen sind, auf der Basis des Zeitfaktors, um mehrere Zeitscheiben zu beziehen, wobei jede Zeitscheibe eine Startzeit und eine Endzeit umfasst;
Bestimmen (S202) der Endzeit jeder Zeitscheibe als einen Partitionspunkt, um die mehreren Partitionspunkte zu beziehen; und
als Reaktion auf ein Erkennen, dass die aktuelle Zeit eine Endzeit einer Zeitscheibe erreicht, Durchführen (S203) eines Clearings und eines Abgleichs an Daten, die zu clearen und abzugleichen sind und die sich vor einer Transaktion, die der aktuellen Zeit entspricht, akkumuliert haben.

4. Verfahren nach Anspruch 1, weiterhin umfassend nach dem Durchführen eines Clearings und eines Abgleichs an den Daten, die zu clearen und abzugleichen sind und die sich vor der aktuellen Transaktion akkumuliert haben:
Zählen (S304) einer Anzahl von Transaktionen, entsprechend Daten, die zu clearen und abzugleichen sind, durch Bestimmen einer nächsten Transaktion, die auf die aktuelle Transaktion folgt, als eine Anfangstransaktion, startend von der nächsten Transaktion, um eine neue Anzahl von Transaktionen zu beziehen; und
Aktualisieren (S305) der Anzahl von Transaktionen auf der Basis der neuen Anzahl von Transaktionen.

5. Clearing- und Abgleichsvorrichtung (500), umfassend:
ein Partitionsmodul (501), das dazu konfiguriert ist, einen voreingestellten Faktor, entsprechend Daten, die zu clearen und abzugleichen sind, zu partitionieren, um mehrere Partitionspunkte zu beziehen; und
ein Clearing- und Abgleichsmodul (502), das dazu konfiguriert ist, ein Clearing und einen Abgleich an Daten, die zu clearen und abzugleichen sind und die sich an jedem Partitionspunkt akkumuliert haben, durchzuführen;
wobei der voreingestellte Faktor ein Unternehmensmaßstabfaktor der Daten ist, die zu clearen und abzugleichen sind, und das Partitionsmodul (501) konfiguriert ist zum:
Zählen einer Anzahl von Transaktionen, die einem Unternehmensmaßstab der Daten entsprechen, die zu clearen und abzugleichen sind, um eine Anzahl von Transaktionen zu beziehen;
Bestimmen, ob die Anzahl von Transaktionen von Daten, die zu clearen und abzugleichen sind, die einer aktuellen Transaktion entsprechen, in Echtzeit einen voreingestellten Anzahlgrenzwert erreicht; und
als Reaktion auf das Bestimmen, dass die Anzahl von Transaktionen der Daten, die zu clearen und abzugleichen sind, die einer aktuellen Transaktion entsprechen, den voreingestellten Anzahlgrenzwert erreicht, Durchführen eines Clearings und eines Abgleichs an Daten, die zu clearen und abzugleichen sind und die sich vor der aktuellen Transaktion akkumuliert haben.

6. Vorrichtung (500) nach Anspruch 5, weiterhin umfassend:
ein Bezugsmodul (503), das dazu konfiguriert ist, ein Ergebnis zu beziehen, das nach dem Durchführen des Clearings und des Abgleichs an den Daten, die zu clearen und abzugleichen sind und die sich an jedem Partitionspunkt akkumuliert haben, bezogen wird; und
ein Zusammenfassungsmodul (504), das dazu konfiguriert ist, das Ergebnis zu fusionieren und zusammenzufassen, um ein Clearing und einen Abgleich an den Daten durchzuführen, die zu clearen und abzugleichen sind.

7. Vorrichtung (500) nach Anspruch 5 oder 6, wobei der voreingestellte Faktor ein Zeitfaktor ist und das Partitionsmodul (501) konfiguriert ist zum:
Partitionieren eines Zeitraums, entsprechend den Daten, die zu clearen und abzugleichen sind, auf der Basis des Zeitfaktors, um mehrere Zeitscheiben zu beziehen, wobei jede Zeitscheibe eine Startzeit und eine Endzeit umfasst;
Bestimmen der Endzeit jeder Zeitscheibe als einen Partitionspunkt, um die mehreren Partitionspunkte zu beziehen; und
als Reaktion auf ein Erkennen, dass die aktuelle Zeit eine Endzeit einer Zeitscheibe erreicht, Durchführen eines Clearings und eines Abgleichs an Daten, die zu clearen und abzugleichen sind und die sich vor einer Transaktion, die der aktuellen Zeit entspricht, akkumuliert haben.

8. Vorrichtung (500) nach Anspruch 5, wobei das Partitionsmodul (501) nach dem Durchführen eines Clearings und eines Abgleichs an den Daten, die zu clearen und abzugleichen sind und die sich vor der aktuellen Transaktion akkumuliert haben, konfiguriert ist zum:
Zählen einer Anzahl von Transaktionen, entsprechend Daten, die zu clearen und abzugleichen sind, durch Bestimmen einer nächsten Transaktion, die auf die aktuelle Transaktion folgt, als eine Anfangstransaktion, startend von der nächsten Transaktion, um eine neue Anzahl von Transaktionen zu beziehen; und
Aktualisieren der Anzahl von Transaktionen auf der Basis der neuen Anzahl von Transaktionen.

9. Nichtflüchtiges computerlesbares Speichermedium, das ein darauf gespeichertes Computerprogramm aufweist, wobei, wenn das Programm von einem Prozessor ausgeführt wird, das Clearing- und Abgleichsverfahren nach einem der Ansprüche 1-4 implementiert wird.

10. Computerprogramm, wobei, wenn eine Anweisung in dem Computerprogramm von einem Prozessor ausgeführt wird, das Clearing- und Abgleichsverfahren nach einem der Ansprüche 1-4 implementiert wird.

## Revendications

1. Procédé de compensation et de rapprochement mis en oeuvre par un appareil informatique (500), comprenant les étapes suivantes :
partitionner (S101) un facteur prédéfini correspondant aux données à effacer et à rapprocher pour obtenir une pluralité de points de partition ; et
effectuer (S 102) la compensation et le rapprochement sur les données à compenser et à rapprocher accumulées à chaque point de partition ;
dans lequel le facteur prédéfini est un facteur d'échelle commerciale des données à compenser et à rapprocher, et le partitionnement (S 101) du facteur prédéfini correspondant aux données à compenser et à rapprocher pour obtenir la pluralité de points de partition comprend les étapes suivantes :
compter (S301) un nombre de transactions correspondant à une échelle commerciale des données à compenser et à rapprocher pour obtenir le nombre de transactions ;
déterminer (S302) si le nombre de transactions des données à compenser et à rapprocher correspondant à une transaction en cours atteint un seuil prédéfini en temps réel ; et
en réponse à la détermination du fait que le nombre de transactions des données à compenser et à rapprocher correspondant à la transaction en cours atteint le seuil prédéfini, effectuer (S303) la compensation et le rapprochement sur les données à compenser et à rapprocher accumulées avant la transaction en cours.

2. Procédé selon la revendication I, comprenant en outre les étapes suivantes :
obtenir (S401) un résultat obtenu après avoir effectué la compensation et le rapprochement sur les données à compenser et à rapprocher accumulées à chaque point de partition ; et
fusionner et résumer (S402) le résultat pour effectuer la compensation et le rapprochement sur les données à compenser et à rapprocher.

3. Procédé selon la revendication 1 ou 2, dans laquelle le facteur prédéfini est un facteur temporel, et le partitionnement (S 101) du facteur prédéfini correspondant aux données à compenser et à rapprocher pour obtenir la pluralité de points de partition comprend les étapes suivantes :
partitionner (S201) une période de temps correspondant aux données à compenser et à rapprocher sur la base du facteur temps pour obtenir une pluralité de tranches de temps, chaque tranche de temps comprenant une heure de début et une heure de fin,
déterminer (S202) l'heure de fin de chaque tranche de temps comme point de partition pour obtenir la pluralité de points de partition ; et
en réponse à la détection du fait que l'heure actuelle atteint une heure de fin d'une tranche de temps, effectuer (S203) une compensation et un rapprochement sur les données à compenser et à rapprocher accumulées avant une transaction correspondant à l'heure actuelle.

4. Procédé selon la revendication 1, après avoir effectué la compensation et la réconciliation sur les données à compenser et à réconcilier accumulées avant la transaction en cours, comprenant en outre les étapes suivantes :
compter (S304), en déterminant une transaction suivant la transaction en cours comme transaction initiale, un nombre de transactions correspondant aux données à compenser et à rapprocher à partir de la transaction suivante pour obtenir un nouveau nombre de transactions ; et
mettre à jour (S305) le nombre de transactions sur la base du nouveau nombre de transactions.

5. Appareil de compensation et de rapprochement (500), comprenant :
un module de partition (501), configuré pour partitionner un facteur prédéfini correspondant aux données à compenser et à rapprocher afin d'obtenir une pluralité de points de partition ; et
un module de compensation et de rapprochement (502), configuré pour effectuer la compensation et le rapprochement des données à compenser et à rapprocher accumulées à chaque point de partition ;
dans lequel le facteur prédéfini est un facteur d'échelle commerciale des données à compenser et à réconcilier, et le module de partition (501) est configuré pour :
compter un nombre de transactions correspondant à une échelle commerciale des données à compenser et à rapprocher pour obtenir un nombre de transactions ;
déterminer si le nombre de transactions des données à compenser et à rapprocher correspondant à une transaction en cours atteint un seuil prédéfini en temps réel ; et
en réponse à la détermination que le nombre de transactions des données à compenser et à rapprocher correspondant à la transaction en cours atteint le seuil prédéfini, effectuer l'compensation et le rapprochement sur les données à compenser et à rapprocher accumulées avant la transaction en cours.

6. Appareil (500) selon la revendication 5, comprenant en outre :
un module d'obtention (503), configuré pour obtenir un résultat obtenu après avoir effectué la compensation et le rapprochement sur les données à compenser et à rapprocher accumulées à chaque point de partition ; et
un module de synthèse (504), configuré pour fusionner et résumer le résultat afin d'effectuer la compensation et la réconciliation sur les données à compenser et à réconcilier.

7. Appareil (500) selon a revendication 5 ou 6, dans lequel le facteur prédéfini est un facteur temporel, et le module de partition (501) est configuré pour :
partitionner une période de temps correspondant aux données à compenser et à rapprocher sur la base du facteur de temps pour obtenir une pluralité de tranches de temps, chaque tranche de temps comprenant une heure de début et une heure de fin ;
déterminer l'heure de fin de chaque tranche de temps comme point de partition pour obtenir la pluralité de points de partition ; et
en réponse à la détection du fait que l'heure actuelle atteint une heure de fin d'une tranche de temps, effectuer une compensation et un rapprochement sur les données à compenser et à rapprocher accumulées avant une transaction correspondant à l'heure actuelle.

8. Appareil (500) selon la revendication 5, après avoir effectué la compensation et le rapprochement sur les données à compenser et à rapprocher accumulées avant la transaction en cours, dans lequel le module de partition (501) est configuré pour :
compter, en déterminant une transaction suivant la transaction en cours comme transaction initiale, un nombre de transactions correspondant aux données à compenser et à rapprocher à partir de la transaction suivante pour obtenir un nouveau nombre de transactions ; et
mettre à jour le nombre de transactions sur la base du nouveau nombre de transactions.

9. Support de stockage non transitoire lisible par ordinateur sur lequel est stocké un programme d'ordinateur, dans lequel, lorsque le programme est exécuté par un processeur, le procédé de compensation et de rapprochement selon l'une quelconque des revendications 1 à 4 est mis en oeuvre.

10. Programme d'ordinateur dans lequel, lorsqu'une instruction du programme d'ordinateur est exécutée par un processeur, le procédé de compensation et de rapprochement selon l'une quelconque des revendications 1 à 4 est mis en oeuvre.
